# EUROPEAN PATENT APPLICATION

(11) **EP 4 598 096 A1**
(43) Date of publication of application: **06.08.2025**
(21) Application number: 23870749.1
(22) Date of filing: 25.09.2023
(51) Int. Cl.: H04W 24/02

(54) **NETWORK DELAY OR JITTER PROCESSING METHOD AND APPARATUS, AND COMMUNICATION DEVICE**

(30) Priority: 30.09.2022 CN 202211217965; 04.11.2022 CN 202211379264
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: HAN, Yan, Beijing 100053 (CN); WANG, Dan, Beijing 100053 (CN); LI, Yongjing, Beijing 100053 (CN); SUN, Tao, Beijing 100053 (CN); LU, Lu, Beijing 100053 (CN)
(74) Representative: Maiwald GmbH
(86) International application number: PCT/CN2023/121232
(87) International publication number: WO 2024/067520

(57) **Abstract**

Disclosed in the present application are a network delay or jitter processing method and apparatus, and a communication device. The method comprises: a first network function receiving a first delay and/or a first jitter, which is sent by an application function, wherein the first delay and/or the first jitter is a delay and/or jitter of an application.

## Description

### CROSS-REFERENCE TO RELATED APPLICATIONS

The application claims priority to Chinese Patent Application No. 202211217965.7, filed on September 30, 2022, and Chinese Patent Application No. 202211379264.3, filed on November 04, 2022, the entire contents of which are incorporated herein by reference.

### TECHNICAL FIELD

The present disclosure relates to a field of wireless communication technologies, and in particular to a method and an apparatus for processing a network delay or a jitter, and a communication device.

### BACKGROUND

Delay is one of important indicators to measure a network performance. For a service that has a strict requirement on the delay, such as an EXtended Reality (XR) and a multimedia service, a configuration related to service transmission needs to be adjusted according to the delay, such as a radio resource configuration. In addition, a delay jitter (jitter for short) is also one of the important indicators to measure the network performance.

When the service is transmitted between a user equipment (UE) and an application server (AS), a plurality of phases are involved, and each phase has its own delay and/or jitter. How to obtain a delay and/or jitter corresponding to a specific phase needs to be improved.

### SUMMARY

Embodiments of the present disclosure provide a method and an apparatus for processing a network delay or a jitter, a communication device, a chip and a computer readable storage medium.

According to the embodiments of the present disclosure, a method for processing a network delay or a jitter is provided, including:
receiving, by a first network function, a first delay and/or a first jitter sent by an application function (AF), in which the first delay and/or the first jitter is a delay and/or a jitter of an application.

In some implementations, the method further includes:
sending, by a first network function, at least one of a second delay, a second jitter, a third delay, a third jitter, the first delay, or the first jitter to an access network element or to an access network element via a second network function.

In some implementations, the second delay is a delay of a network transmission process (a process that a data packet transmits between a user plane function (UPF) and a UE).

In some implementations, the second jitter is a jitter of a network transmission process.

In some implementations, the network transmission includes N3 transmission and/or N9 transmission.

In some implementations, the third delay is a delay between an application server (AS) and a UPF, and transmission between the AS and the UPF is N6 transmission. The AS may be an edge application server, an edge node, or an edge application node.

In some implementations, the third jitter is a jitter between an AS and a UPF, and transmission between the AS and the UPF is N6 transmission.

In some implementations, the second delay includes a fourth delay and/or a fifth delay, in which the fourth delay is a transmission delay between a UE and the access network element, and the fifth delay is a transmission delay between a UPF and the access network element.

In some implementations, the second jitter includes a fourth jitter and/or a fifth jitter, in which the fourth jitter is a jitter between a UE and the access network element, and the fifth jitter is a jitter between a UPF and the access network element.

In some implementations, the transmission delay is a one-way delay (OWD) and/or a round-trip time (RTT).

In some implementations, the method further includes:
adjusting, by the access network element, a radio resource configuration and/or a packet prediction based on at least one of the second delay, the second jitter, the third delay, the third jitter, the first delay, or the first jitter.

In some implementations, in response to the access network element failing to adjust the radio resource configuration, notifying, by the access network element, the second network function or the first network function, so that the second network function or the first network function notifies the AF to adjust a policy.

In some implementations, the method further includes:
sending, by the first network function, at least one of the second delay, the second jitter, the third delay, the third jitter, the first delay, or the first jitter to the AF, the AF adjusting a policy.

In some implementations, the third delay and/or the third jitter is an N6 transmission delay and/or jitter which is pre-configured by a network on a fourth network function or the second network function.

In some implementations, the second delay and/or the second jitter is pre-configured by a network; or, the second delay and/or the second jitter is obtained by a measurement.

In some implementations, in response to the second delay and/or the second jitter being obtained by the measurement, the method further includes:
receiving, by the first network function, the second delay sent by the second network function, in which the second delay is obtained based on a measurement process.

In some implementations, in response to the second delay and/or the second jitter being obtained by the measurement, the method further includes:
sending, by the first network function, the second delay to a third network function, in which the third network function determines the second jitter based on the second delay, and the first network function receives the second jitter sent by the third network function.

In some implementations, in response to the second delay and/or the second jitter being obtained by the measurement, the method further includes:
determining, by the first network function, the second jitter based on the second delay.

In some implementations, the method further includes:
sending, by the first network function, the second delay and/or the second jitter to the AF.

In some implementations, the measurement process includes:
receiving, by the first network function, a quality of service (QoS) monitoring request sent by the AF.

In some implementations, the measurement process includes:
sending, by the first network function, a QoS monitoring policy to the second network function according to a QoS monitoring request, and sending, by the second network function, a first delay measurement request to the access network element and a second delay measurement request to the UPF according to the QoS monitoring policy.

In some implementations, the first delay measurement request is configured to request the access network element to measure a transmission delay between the UE and the access network element; and the second delay measurement request is configured to request the UPF to measure a transmission delay between the access network element and the UPF.

In some implementations, the measurement process includes:
sending, by the access network element, a measured transmission delay between the UE and the access network element to the UPF; and
determining, by the UPF, the second delay according to a received transmission delay between the UE and the access network element and a measured transmission delay between the access network element and the UPF, and sending the second delay to the second network function.

In some implementations, the QoS monitoring request carries at least one of a delay measurement identifier, a delay measurement time period, a delay measurement frequency, first indication information, second indication information, or third indication information, in which the first indication information indicates to measure an OWD and/or measure an RTT, the second indication information indicates whether the UE is clock synchronized with the access network element, and the third indication information indicates whether the UPF is clock synchronized with the access network element.

In some implementations, the QoS monitoring policy carries at least one of a delay measurement identifier, a delay measurement time period, a delay measurement frequency, first indication information, second indication information, or third indication information, in which the first indication information indicates to measure an OWD and/or measure an RTT (The RTT may also be called a bidirectional delay), the second indication information indicates whether the UE is clock synchronized with the access network element, and the third indication information indicates whether the UPF is clock synchronized with the access network element.

In some implementations, the first delay measurement request carries at least one of a delay measurement time period, a delay measurement frequency, first indication information, or second indication information, in which the first indication information indicates to measure an OWD and/or measure an RTT, and the second indication information indicates whether the UE is clock synchronized with the access network element.

In some implementations, in response to the first indication information indicating to measure the OWD, measuring, by the access network element, an OWD between the UE and the access network element; and in response to the first indication information indicating to measure the RTT, measuring, by the access network element, an RTT between the UE and the access network element.

In some implementations, the second delay measurement request carries at least one of a delay measurement time period, a delay measurement frequency, first indication information, or third indication information, in which the first indication information indicates to measure an OWD and/or measure a round-trip delay (RTT), and the third indication information indicates whether the UPF is clock synchronized with the access network element.

In some implementations, in response to the first indication information indicating to measure the OWD, measuring, by the UPF, an OWD between UPF and the access network element; and in response to the first indication information indicating to measure the RTT, measuring, by the UPF, an RTT between the UPF and the access network element.

According to the embodiments of the present disclosure, a method for processing a network delay or a jitter is provided, including:
measuring an uplink delay between a UE and a UPF; and/or measuring a downlink delay between the UPF and the UE.

In some implementations, the UPF is clock synchronized with an access network element; or, the UPF is not clock synchronized with an access network element.

In some implementations, in the case that the UPF is clock synchronized with the access network element, the method further includes: in response to measuring the uplink delay between the UE and the UPF,
receiving, by the UPF, a first uplink packet sent by the access network element and an uplink delay between the UE and the access network element measured by the access network element sent along with the first uplink packet; and
determining, by the UPF, the uplink delay between the UE and the UPF according to a timestamp carried by the first uplink packet and a received uplink delay between the UE and the access network element.

In some implementations, the first uplink packet is an uplink packet sent by the access network element to the UPF.

In some implementations, in the case that the UPF is clock synchronized with the access network element, the method further includes: in response to measuring the downlink delay between the UPF and the UE,

sending, by the UPF, a first downlink packet to the access network element; the access network element sending a second uplink packet after receiving the first downlink packet sent by the UPF; and the second uplink packet carrying time information of the first downlink packet.

In some implementations, the method further includes:
receiving, by the UPF, the second uplink packet sent by the access network element and a downlink delay between the access network element and the UE measured by the access network element sent along with the second uplink packet; and
determining, by the UPF, the downlink delay between the UPF and the UE according to the time information of the first downlink packet carried by the second uplink packet and a received downlink delay between the access network element and the UE.

In some implementations, in the case that the UPF is not clock synchronized with the access network element, the method further includes: in response to measuring the uplink delay between the UE and the UPF,
receiving, by the UPF, a third uplink packet sent by the access network element and sending a first probe packet to the access network element.

In some implementations, the method further includes:
determining, by the access network element, an uplink delay between the access network element and the UPF according to receiving time information of the first probe packet, and/or sending time information of the first probe packet, and/or sending time information of the third uplink packet, and/or receiving time information of the third uplink packet.

In some implementations, sending, by the access network element, a determined uplink delay between the access network element and the UPF and a measured uplink delay between the UE and the access network element along with a fourth uplink packet to the UPF.

In some implementations, the method further includes:
determining, by the UPF, the uplink delay between the UE and the UPF according to a received uplink delay between the access network element and the UPF and an uplink delay between the UE and the access network element.

In some implementations, in the case that the UPF is not clock synchronized with the access network element, the method further includes: in response to measuring the downlink delay between the UPF and the UE,
sending, by the access network element, a second probe packet to the UPF after receiving a second downlink packet sent by the UPF; and the second probe packet carrying a downlink delay between the access network element and the UE.

In some implementations, the method further includes:
determining, by the UPF, a downlink delay between the UPF and the access network element according to receiving time information of the second probe packet, and/or sending time information of the second probe packet, and/or sending time information of the second downlink packet, and/or receiving time information of the second downlink packet.

In some implementations, determining, by the UPF, the downlink delay between the UPF and UE according to the downlink delay between the UPF and the access network element and the downlink delay between the access network element and the UE.

According to the embodiments of the present disclosure, a method for processing a jitter is provided, including:
in a downlink scenario, generating, by a fifth network function, first information according to a data packet or a data burst, in which the first information is information related to the jitter.

In some implementations, the fifth network function is a UPF.

In some implementations, the first information is a jitter in a transmission process between an AS and a UPF, that is, an N6 jitter or an N6 transmission jitter.

In some implementations, the first information includes at least one of: jitter information; data jitter information related to a period; or information of a jitter or a jitter range of a service flow.

In some implementations, the fifth network function generates the first information based on received second information sent by a sixth network function.

In some implementations, the sixth network function is a session management function (SMF).

In some implementations, the second information is policy information of a core network.

In some implementations, the second information includes at least one of: a jitter calculation policy, a jitter monitoring policy, a jitter statistical policy, or a jitter policy.

In some implementations, the fifth network function generates the first information based on third information sent by an AF to a 5G core network function.

In some implementations, the third information includes at least one of: indication information indicating a 5G network to perform jitter statistics and/or a jitter measurement; or service information, including at least one of: an Internet Protocol (IP) 5-tuple, an application identity (ID), and an application identifier.

In some implementations, the fifth network function generates the first information according to at least one of an arrival time of the data packet, an arrival time of the data burst, and a timestamp carried by the data packet.

In some implementations, the fifth network function recognizes that the data packet belongs to a first data burst according to the timestamp carried by the data packet; and the fifth network function generates the first information according to an arrival time of the first data burst.

In some implementations, the method further includes:
the fifth network function sending the first information to a base station or a seventh network function.

In some implementations, the seventh network function is a control plane function of a 5G core network, which may be an SMF.

In some implementations, the method further includes:
sending, by the fifth network function or the control plane function of the 5G core network, fourth information to the base station.

In some implementations, the control plane function of the 5G core network is the SMF.

In some implementations, the fourth information is a network transmission jitter, measured by the core network or preconfigured by a network, including at least one of: an N3 jitter or an N3 transmission jitter; an N9 jitter or an N9 transmission jitter; and a transmission jitter or a jitter between the base station and a PSA UPF. The PSA UPF is short for protocol data unit session anchor user plane function.

According to the embodiments of the present disclosure, an apparatus for processing a network delay or a jitter is provided, including:
a receiving unit, configured to receive a first delay and/or a first jitter sent by an AF, in which the first delay and/or the first jitter is a delay and/or a jitter of an application.

According to the embodiments of the present disclosure, an apparatus for processing a network delay or a jitter is provided, including:
a measuring unit, configured to measure an uplink delay between a UE and a UPF; and/or measure a downlink delay between the UPF and the UE.

According to the embodiments of the present disclosure, an apparatus for processing a jitter is provided, including:
a processing unit, configured to generate first information according to a data packet or a data burst, in which the first information is information related to the jitter.

According to the embodiments of the present disclosure, a communication device is provided, including a processor and a memory for storing a computer program. When the computer program stored in the memory is called and run by the processor, the communication device is caused to implement any one of the methods for processing a network delay or a jitter.

According to the embodiments of the present disclosure, a communication device is provided, including: a processor for calling and running a computer program from a memory, so that a device installed with the chip is caused to implement any one of the above methods.

According to the embodiments of the present disclosure, a computer readable storage medium for storing a computer program is provided, in which the computer program causes a computer to implement any one of the above methods.

In a technical solution of the embodiments of the present disclosure, a method of obtaining the first delay and/or the first jitter is specified, in which the first delay and/or the first jitter is the delay and/or the jitter of the application. Furthermore, a method of obtaining at least one of the second delay, the second jitter, the third delay or the third jitter is specified, in which the second delay is the delay of the network transmission process, and the second jitter is the jitter of the network transmission process. Specifying a delay and/or a jitter corresponding to each phase provides a basis for adjusting a configuration and/or a policy related to service transmission.

### BRIEF DESCRIPTION OF THE DRAWINGS

The accompanying drawings, which are incorporated in and constitute a part of the description, illustrate embodiments consistent with the present disclosure and, together with the description, serve to explain the principles of the present disclosure.
FIG. 1 is a schematic diagram of an application scenario according to the embodiments of the present disclosure.
FIG. 2 is a schematic diagram of a wireless frame structure.
FIG. 3 is a flowchart 1 of a method for processing a network delay or a jitter according to the embodiments of the present disclosure.
FIG. 4 is a flowchart 2 of a method for processing a network delay or a jitter according to the embodiments of the present disclosure.
FIG. 5 is a flowchart 3 of a method for processing a network delay or a jitter according to the embodiments of the present disclosure.
FIG. 6 is a flowchart of a process of a network measurement of a delay and/or a jitter according to the embodiments of the present disclosure.
FIG. 7-1 is a schematic diagram of measuring an RTT2 of a downlink packet according to the embodiments of the present disclosure.
FIG. 7-2 is a schematic diagram of measuring an RTT1 of an uplink packet according to the embodiments of the present disclosure.
FIG. 8 is a schematic diagram 1 of a structure of an apparatus for processing a network delay or a jitter according to the embodiments of the present disclosure.
FIG. 9 is a schematic diagram 2 of a structure of an apparatus for processing a network delay or a jitter according to the embodiments of the present disclosure.
FIG. 10 is a flowchart of a method for processing a jitter according to the embodiments of the present disclosure.
FIG. 11 is a schematic diagram of a structure of an apparatus for processing a jitter according to the embodiments of the present disclosure.
FIG. 12 is a block diagram of a communication device according to the embodiments of the present disclosure.
FIG. 13 is a block diagram of a chip according to the embodiments of the present disclosure.

### DETAILED DESCRIPTION

A technical solution in the embodiments of the present disclosure will be described below in combination with the accompanying drawings of the present disclosure. Obviously, described embodiments are part of the embodiments of the present disclosure, but not all embodiments of the present disclosure. Based on the embodiments of the present disclosure, other embodiments obtained by those skilled in the art without inventive efforts are within scope of the present disclosure.

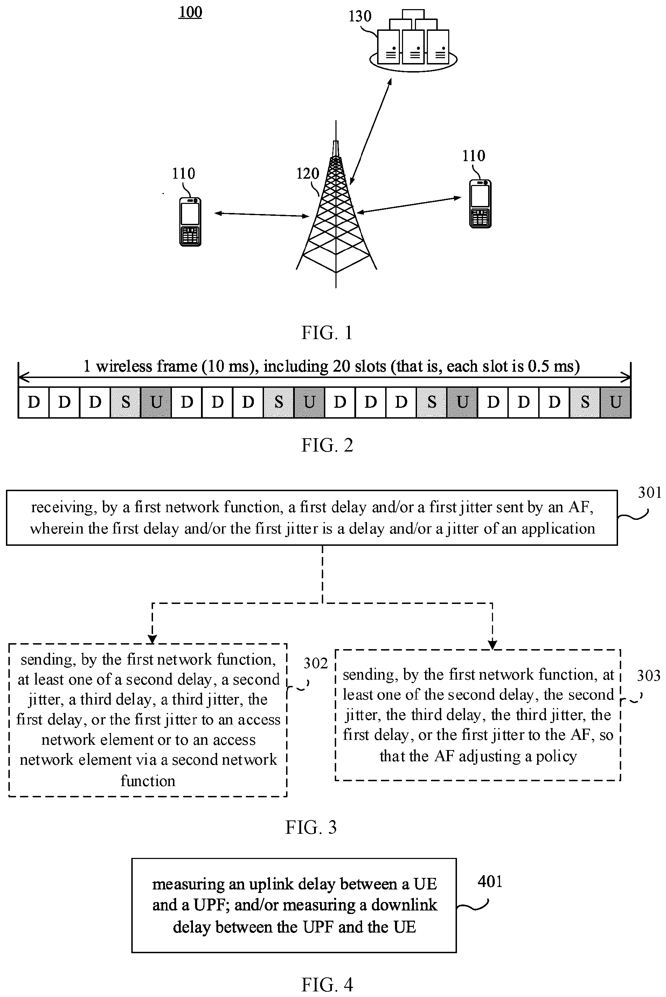

FIG. 1 is a schematic diagram of an application scenario according to the embodiments of the present disclosure. As shown in FIG. 1, a communication system 100 may include a terminal 110 and a network device 120. The network device 120 may communicate with the terminal 110 via an air interface. Multi-service transmission is supported between the terminal 110 and the network device 120. The wireless communication system 100 may also include a core network device 130 that communicates with the network device 120.

It should be understood that the communication system 100 are only illustrative of the embodiments of the present disclosure, but the embodiments of the present disclosure are not limited to it. In other words, the technical solution in the embodiments of the present disclosure may be applied to various communication systems, such as: a 5G communication system (also known as a new radio (NR) communication system), or a communication system in the future.

In the communication system 100 shown in FIG. 1, the network device 120 may be an access network device communicating with the terminal 110. The access network device may provide communication coverage for a specific geographic area and may communicate with the terminal 110 (e.g., a UE) located within the communication coverage. The network device 120 may be a base station (gNB) in an NR system, and the terminal 110 may be any terminal.

FIG. 1 shows a base station, a core network device, and two terminals. Optionally, the wireless communication system 100 may include a plurality of base stations and a coverage range of each base station may include other numbers of terminals, which is not limited by the embodiments of the present disclosure.

It should be noted that FIG. 1 is only an example of a system to which the present disclosure applies, and the method in the embodiments of the present disclosure may also be applicable to other systems. In addition, terms "system" and "network" are often used interchangeably throughout the present disclosure. In the present disclosure, the term "and/or" describes a relationship between associated objects, indicating that there may be three relationships, for example, A and/or B means A, A and B at the same time, and B. The character "/" generally indicates that the relationship between associated objects is an "or" relationship. It should also be understood that the term "indicate" in the embodiments of the present disclosure may refer to "directly indicate" or "indirectly indicate", or may indicate an association relationship. For example, A indicating B means that A directly indicates B, for example, B may be obtained based on A; or means that A indirectly indicates B, for example, A indicates C, and B may be obtained based on C; or means that that A have an association relationship with B. It should also be understood that the term "correspond to" in the embodiments of the present disclosure may indicate that there is a direct or indirect correspondence between two objects, or that there is an association relationship between the two objects, or that it may represent a relationship between indicating and be indicated or configuring and be configured. It should also be understood that terms "predefined" or "predefined rule" mentioned in the embodiments of the present disclosure may be realized by saving corresponding code, a table or other ways in which related information may be indicated in a device (e.g., including a terminal and a network device) in advance, which is not limited in the present disclosure. For example, "predefined" may refer to what is defined in a protocol. It should also be understood that in the embodiments of the present disclosure, the "protocol" may refer to a standard protocol in a communications field, such as an NR protocol and a related protocol applied to a future communication system, which is not limit in the present disclosure.

In a related standard, a measurement indicator in QoS parameters in a 5G core network includes a data packet delay budget (that is, a delay parameter), a packet error rate, a maximum data burst, and an average window and other parameters, but does not include a jitter parameter. There is no solution that takes into account an impact of a transport layer delay on an application layer delay. For this reason, the following technical solution in the embodiments of the present disclosure is proposed.

It should be noted that the technical solution in the embodiments of the present disclosure takes 5G as an example, but the technical solution of the embodiments of the present disclosure may be but is not limited to be applied to 5G. Core network elements in 5G include but are not limited to:
Application Function(AF): a network function for interfacing with a 5G core network for an application;
Network Exposure Function (NEF): a network function that exposes network information to the application;
Policy Control Function (PCF): a network function responsible for formulating a network policy;
Network Data Analytics Function (NWDAF): a network function responsible for network intelligence and network data analysis;
Session Management Function(SMF): a network function responsible for session management;
Access and Mobility Management Function (AMF): a network function responsible for an access and mobility of a UE;
User Plane Function (UPF): a network function responsible for a user plane.

In addition, 5G also involves a radio access network (RAN). A device corresponding to the RAN is an access network device (or a network element corresponding to the RAN is called the access network element), such as a base station.

In a process of a network evolution, above core network devices may also be called by other names, or form a new network entity by dividing functions of the core network, which is not limited in the embodiment of the present disclosure.

Configuration information of radio resources between the UE and the RAN is referred to as a radio resource configuration, and uplink/downlink communication between the UE and the RAN needs to be based on the radio resource configuration. The radio resource configuration includes a radio frame structure configuration, as shown in FIG. 2, taking a subcarrier interval of 30KHz as an example, one radio frame (10 ms) includes 20 slots (that is, each slot is 0.5 ms), in which D represents a downlink slot, S represents a flexible slot, and U represents an uplink slot. A network side device may dynamically adjust the radio resource configuration based on a delay and a jitter, for example, adjust a direction of the slot shown in FIG. 2.

FIG. 3 is a flowchart of a method for processing a network delay or a jitter according to the embodiments of the present disclosure. As shown in FIG. 3, the method for processing a network delay or a jitter includes following step.

At S301, a first network function receives a first delay and/or a first jitter sent by an AF, in which the first delay and/or the first jitter is a delay and/or a jitter of an application.

The first network function may be a PCF.

The first network function receiving the first delay and/or the first jitter sent by the AF may be: the first network function receiving the first delay and/or the first jitter sent by the AF via another network element. For example, the PCF receives the first delay and/or the first jitter sent by the AF via an NEF.

### About the first delay and/or the first jitter

The first delay and/or the first jitter is the delay and/or the jitter of the application, that is, the delay and the jitter generated by the application. The first delay and/or the first jitter may also be referred to as the application layer delay and/or jitter.

**In** some implementations, the method for processing a network delay or a jitter further includes the following step.

At S302, the first network function sends at least one of a second delay, a second jitter, a third delay, a third jitter, the first delay, or the first jitter to an access network element or to an access network element via a second network function.

The second network function may be an SMF and/or an AMF. For example, the PCF sends at least one of the second delay, the second jitter, the third delay, the third jitter, the first delay, or the first jitter to the access network element via the SMF and the AMF.

### About the second delay and/or the second jitter

The second delay is a delay of a network transmission process. The second jitter is a jitter of the network transmission process. The second delay and/or the second jitter may also be referred to as a transmission layer delay and/or jitter.

In some implementations, the network transmission includes N3 transmission and/or N9 transmission. The N3 transmission refers to transmission between the access network element and the UPF, and the N9 transmission refers to transmission between two UPFs.

In some implementations, the second delay includes a fourth delay and/or a fifth delay, in which the fourth delay is a transmission delay between a user equipment (UE) and the access network element (for example, for 5G, the transmission delay is an Uu transmission delay), and the fifth delay is a transmission delay between a UPF and the access network element (for example, for 5G, the transmission delay is an N3 transmission delay). The second jitter includes a fourth jitter and/or a fifth jitter, in which the fourth jitter is a jitter between the UE and the access network element, and the fifth jitter is a jitter between the UPF and the access network element. The transmission delay may be an OWD and/or an RTT.

For example, the transmission delay between the UE and the access network element is represented by *τₐᵢᵣ*, and the jitter between the UE and the access network element is represented by *σₐᵢᵣ*.

For example, the transmission delay between the UPF and the access network element is represented by *τ_{UR}*, and the jitter between the UPF and the access network element is represented by *σ_{UR}.*

In the embodiments of the present disclosure, methods that the first network function obtains the second delay and/or the second jitter include the following:
Method 1: the second delay and/or the second jitter is pre-configured by a network.
Method 2: the second delay and/or the second jitter is obtained by a measurement.

As one implementation, in response to the second delay and/or the second jitter being obtained by the measurement, the first network function receives the second delay sent by the second network function, in which the second delay is obtained based on a measurement process. The first network function sends the second delay to a third network function. The third network function determines the second jitter based on the second delay. The first network function receives the second jitter sent by the third network function.

The first network function may be a PCF.

The first network function may be an SMF.

The first network function may be an NWDAF.

For example, the PCF receives the second delay sent by the SMF, in which the second delay is obtained based on the measurement process; and the PCF sends the second delay to the NWDAF. The NWDAF determines the second jitter based on the second delay, and sends the second jitter to the PCF.

As another implementation, in response to the second delay and/or the second jitter being obtained by the measurement, the first network function receives the second delay sent by the second network function, in which the second delay is obtained based on the measurement process. The first network function determines the second jitter based on the second delay.

The first network function may be the PCF.

The second network function may be the SMF.

For example, the PCF receives the second delay sent by the SMF, the second delay is obtained based on the measurement process; and the PCF determines the second jitter based on the second delay.

In some implementations, the first network function sends the second delay and/or the second jitter to the AF.

The first network function may send the second delay and/or the second jitter to the AF via another network element. For example, the PCF sends the second delay and/or the second jitter to the AF via the NEF.

In the above solution, the second delay is obtained based on the measurement process. In some implementations, the measurement process includes some or all of following steps:
1) The first network function receives a QoS monitoring request sent by the AF.
2) The first network function sends a QoS monitoring policy to the second network function according to the QoS monitoring request.
3) The second network function sends a first delay measurement request to the access network element and a second delay measurement request to the UPF according to the QoS monitoring policy. The first delay measurement request is configured to request the access network element to measure a transmission delay between the UE and the access network element. The second delay measurement request is configured to request the UPF to measure a transmission delay between the access network element and the UPF.
4) The access network element sends a measured transmission delay between the UE and the access network element to the UPF.
5) The UPF determines the second delay according to a received transmission delay between the UE and the access network element and a measured transmission delay between the access network element and the UPF, and sends the second delay to the second network function.

The first network function may be the PCF.

The second network function may be the SMF.

In an example, the PCF receives the QoS monitoring request from the AF via the NEF; the PCF sends the QoS monitoring policy to the SMF according to the QoS monitoring request; the SMF sends the first delay measurement request to the RAN and the second delay measurement request to the UPF according to the QoS monitoring policy, in which the first delay measurement request is configured to request the RAN to measure a transmission delay between the UE and the RAN, and the second delay measurement request is configured to request the UPF to measure a transmission delay between the RAN and the UPF; the RAN sends the measured transmission delay between the UE and the RAN to the UPF, and the UPF determines the second delay based on the transmission delay between the UE and the RAN and the transmission delay between the RAN and the UPF and sends the second delay to the SMF; and then the SMF sends the second delay to the PCF so as to determine the second jitter.

In the above solution, in some implementations, the QoS monitoring request carries at least one of a delay measurement identifier, a delay measurement time period, a delay measurement frequency, first indication information, second indication information, or third indication information. The first indication information indicates to measure an OWD and/or measure an RTT, the second indication information indicates whether the UE is clock synchronized with the access network element, and the third indication information indicates whether the UPF is clock synchronized with the access network element.

In the above solution, in some implementations, the QoS monitoring policy carries at least one of a delay measurement identifier, a delay measurement time period, a delay measurement frequency, first indication information, second indication information, or third indication information. The first indication information indicates to measure an OWD and/or measure an RTT. The second indication information indicates whether the UE is clock synchronized with the access network element. The third indication information indicates whether the UPF is clock synchronized with the access network element.

In the above solution, in some implementations, the first delay measurement request carries at least one of a delay measurement time period, a delay measurement frequency, first indication information, or second indication information. The first indication information indicates to measure an OWD and/or measure an RTT. The second indication information indicates whether the UE is clock synchronized with the access network element.

In response to the first indication information indicating to measure the OWD, the access network element measures an OWD between the UE and the access network element. In response to the first indication information indicating to measure the RTT, the access network element measures an RTT between the UE and the access network element.

It should be noted that the OWD in the above solution may be a one-way uplink delay or a one-way downlink delay.

Further, in the case that the access network element measures the RTT between the UE and the access network element, option 1) if the uplink delay and the downlink delay are measured separately, the access network element measures the uplink delay and the downlink delay between the UE and the access network element, and determines the RTT between the UE and the access network element based on the uplink delay and the downlink delay; or option 2) if the uplink delay and the downlink delay are not measured separately, the access network element directly measures the RTT between the UE and the access network element.

In the above solution, in some implementations, the second delay measurement request carries at least one of a delay measurement time period, a delay measurement frequency, first indication information, or third indication information. The first indication information indicates to measure an OWD and/or measure an RTT. The third indication information indicates whether the UPF is clock synchronized with the access network element.

In response to the first indication information indicating to measure the OWD, the UPF measures an OWD between the UPF and the access network element. In response to the first indication information indicating to measure the RTT, the UPF measures an RTT between the UPF and the access network element.

It should be noted that the OWD in the above solution may be a one-way uplink delay or a one-way downlink delay.

Further, in the case that the UPF measures the RTT between the UPF and the access network element,
if the uplink delay and the downlink delay are measured separately, the UPF measures the uplink delay and the downlink delay between the UPF and the access network element, and determines the RTT between the UPF and the access network element based on the uplink delay and the downlink delay;
if the second indication information indicates that the uplink delay and the downlink delay are not measured separately, the UPF directly measures the RTT between the UPF and the access network element.

### About the third delay and/or the third jitter

The third delay is a delay between an application server (AS) and the UPF, and transmission between the AS and the UPF is N6 transmission. The third jitter is a jitter between the AS and the UPF, and the transmission between the AS and the UPF is the N6 transmission.

For example, a transmission delay between the AS and the UPF is represented by *τ_{AU}*, and the jitter between the AS and the UPF is represented by *σ_{AU}*.

In some implementations, the third delay and/or the third jitter is an N6 transmission delay and/or jitter which is pre-configured on a fourth network function or the second network function.

The fourth network function may be the NEF, and the second network function may be the SMF.

In some implementations, after receiving at least one of the second delay, the second jitter, the third delay, the third jitter, the first delay, or the first jitter, the access network element adjusts a radio resource configuration and/or a packet prediction based on at least one of the second delay, the second jitter, the third delay, the third jitter, the first delay, or the first jitter.

The radio resource configuration and/or the packet prediction may be adjusted in following ways: after receiving at least one of the second delay, the second jitter, the third delay, the third jitter, the first delay, or the first jitter, the access network element adjusts a time window shown in FIG. 2 as needed, so that as many packets as possible within a packet burst time period are received in the time window.

Further, in some implementations, in response to the access network element failing to adjust the radio resource configuration, the access network element notifies the second network function or the first network function, so that the second network function or the first network function notifies the AF to adjust a policy. The access network element may notify at least one of the second delay, the second jitter, the third delay, the third jitter, the first delay, or the first jitter to the second network function or the first network function.

The second network function may be the SMF, and the first network function may be the PCF. For example, in response to the access network element failing to adjust the radio resource configuration, the access network element sends at least one of the second delay, the second jitter, the third delay, the third jitter, the first delay, or the first jitter to the SMF or the PCF via the AMF, and the SMF or the PCF adjusts a policy.

In some implementations, the method for processing a network delay or a jitter may further includes S303.

At S303, the first network function sends at least one of the second delay, the second jitter, the third delay, the third jitter, the first delay, or the first jitter to the AF, so that the AF adjusts a policy.

The first network function may send at least one of the second delay, the second jitter, the third delay, the third jitter, the first delay, or the first jitter to the AF via another network element. For example, the PCF sends at least one of the second delay, the second jitter, the third delay, the third jitter, the first delay, or the first jitter to the AF via the NEF, and the AF adjusts a policy.

It should be noted that in the technical solution of the embodiments of the present disclosure, a function of at least one of the second delay, the second jitter, the third delay, the third jitter, the first delay, or the first jitter is configured to adjust the radio resource configuration, the packet prediction, the policy (such as a transmission-related coding and decoding policy), and the like, which is not limited thereto and may also be used for other functions.

FIG. 4 is a flowchart of a method for processing a network delay or a jitter according to the embodiments of the present disclosure. AS shown in FIG.4, the method for processing a network delay or a jitter includes S401.

At S401, an uplink delay between a UE and a UPF is measured; and/or a downlink delay between the UPF and the UE is measured.

In one case, the UPF is clock synchronized with an access network element.

In another case, the UPF is not clock synchronized with the access network element.

Whether the UPF is clock synchronized with the access network element may be indicated by the third indication information in the above solution.

A method for clock synchronization between the UPF and the access network element includes, but is not limited to:
Method 1: the clock synchronization between the UPF and the access network element is implemented according to IEEE 1588 protocol and 802.1AS generalized precision time protocol (gPTP).
Method 2: a satellite positioning function is added to the UPF, and the clock synchronization between the UPF and the access network element is implemented according to satellite positioning.
Method 3: the clock synchronization between the UPF and the access network element is implemented with an intermediate part as a black box according to an international telecommunication union (ITU) protocol.

### Case 1: the UPF is clock synchronized with the access network element

In response to measuring the uplink delay between the UE and the UPF, the UPF receives a first uplink packet sent by the access network element and an uplink delay between the UE and the access network element measured by the access network element sent along with the first uplink packet. The UPF determines the uplink delay between the UE and the UPF according to a time stamp carried by the first uplink packet and a received uplink delay between the UE and the access network element. The first uplink packet is an uplink packet sent by the access network element to the UPF.

The access network element measuring the uplink delay between the UE and the access network element includes: the UE sending a fifth uplink packet to the access network element; and the access network element determining the uplink delay between the UE and the access network element based on a time stamp carried by the fifth uplink packet (a sending time stamp of the fifth uplink packet) and a receiving time stamp of the fifth uplink packet.

As an example, the uplink delay between the UE and the access network element measured by the access network element is represented by T1. The access network element sends the T1 to the UPF along with the first uplink packet, and the time stamp carried by the first uplink packet is represented by t1. The UPF determines the uplink delay between the UE and the UPF = T1 + (t2 - t1) according to the time stamp t1 carried by the first uplink packet and a received uplink delay T1 between the UE and the access network element, where t2 represents a time stamp when the UPF receives the first uplink packet (that is, the receiving time stamp of the first uplink packet).

In response to measuring the downlink delay between the UPF and the UE, the UPF sends a first downlink packet to the access network element. The access network element sends a second uplink packet after receiving the first downlink packet sent by the UPF. The second uplink packet carries time information of the first downlink packet. Further, the UPF receives the second uplink packet sent by the access network element and a downlink delay between the access network element and the UE measured by the access network element sent along with the second uplink packet. The UPF determines the downlink delay between the UPF and the UE according to the time information of the first downlink packet carried by the second uplink packet and a received downlink delay between the access network element and the UE.

The access network element measuring the downlink delay between the access network element and the UE includes: after receiving a third downlink packet sent by the access network element, the UE sending a sixth uplink packet, in which the sixth uplink packet carries time information of the third downlink packet (that is, a receiving time stamp of the third downlink packet, and, optionally, the time information of the third downlink packet may further include a sending time stamp of the third downlink packet). Further, the UE sends the sixth uplink packet to the access network element, and the access network element determines the downlink delay between the access network element and the UE based on the time information of the third downlink packet carried by the sixth uplink packet.

As an example, the downlink delay between the access network element and the UE measured by the access network element is represented by T2. The UPF sends the first downlink packet to the access network element. The access network element sends the second uplink packet after receiving the first downlink packet sent by the UPF. The second uplink packet carries the time information of the first downlink packet (that is, a receiving time stamp t3 of the first downlink packet, and, optionally, the time information of the first downlink packet may further include a sending time stamp t4 of the first downlink packet). Further, the UPF receives the second uplink packet sent by the access network element and the downlink delay T2 between the access network element and the UE sent along with the second uplink packet. The UPF determines the downlink delay between the UPF and the UE = T2 + (t3 - t4) according to the time information (t3, t4) of the first downlink packet carried by the second uplink packet and a received downlink delay T2 between the access network element and the UE.

### Case 2: the UPF is not clock synchronized with an access network element not synchronizing their clocks

In response to measuring the uplink delay between the UE and the UPF, the UPF receives a third uplink packet sent by the access network element and sends a first probe packet to the access network element. Further, the access network element determines an uplink delay between the access network element and the UPF according to receiving time information of the first probe packet, and/or sending time information of the first probe packet, and/or sending time information of the third uplink packet, and/or receiving time information of the third uplink packet.

The access network element sends a determined uplink delay between the access network element and the UPF and a measured uplink delay between the UE and the access network element along with a fourth uplink packet to the UPF. Further, the UPF determines the uplink delay between the UE and the UPF according to a received uplink delay between the access network element and the UPF and an uplink delay between the UE and the access network element.

The first probe packet may be a small probe packet, and a first priority may be a highest priority.

The uplink delay between the access network element and the UPF is expressed as [(a receiving time of the first probe packet - a sending time of the third uplink packet) + (a sending time of the first probe packet - a receiving time of the third uplink packet)] / 2.

As an example, the uplink delay between the UE and the access network element measured by the access network element is represented by T1. The UPF receives a third uplink packet sent by the access network element and sends the first probe packet to the access network element. Further, the access network element determines an uplink delay T3 between the access network element and the UPF expressed as T3 = [(t5 - t6) + (t5' - t6')] / 2 according to receiving time information t5 of the first probe packet, sending time information t5' of the first probe packet, sending time information t6 of the third uplink packet, and receiving time information t6' of the third uplink packet. The access network element sends the determined uplink delay T3 between the access network element and the UPF and the measured uplink delay T1 between the UE and the access network element along with the fourth uplink packet to the UPF. Further, the UPF determines the uplink delay between the UE and the UPF expressed as T3 + T1 according to the received uplink delay T3 between the access network element and the UPF and the uplink delay T1 between the UE and the access network element.

In response to measuring the downlink delay between the UPF and the UE, the access network element sends a second probe packet to the UPF after receiving a second downlink packet sent by the UPF. The second probe packet carries the downlink delay between the access network element and the UE. Further, the UPF determines a downlink delay between the UPF and the access network element according to receiving time information of the second probe packet, and/or sending time information of the second probe packet, and/or sending time information of the second downlink packet, and/or receiving time information of the second downlink packet.

The UPF determines the downlink delay between the UPF and UE according to the downlink delay between the UPF and the access network element and the downlink delay between the access network element and the UE.

The downlink delay between the access network element and the UPF is expressed as [(a receiving time of the second probe packet - a sending time of the second downlink packet) + (a sending time of the second probe packet - a receiving time of the second downlink packet)] / 2.

As an example, the downlink delay between the access network element and the UE measured by the access network element is represented by T2. The access network element sends a second probe packet to the UPF after receiving a second downlink packet sent by the UPF. The second probe packet carries a downlink delay T2 between the access network element and the UE. Further, the UPF determines a downlink delay T4 between the UPF and the access network element expressed as T4 = [(t7 - t8) + (t7' - t8')] / 2 according to receiving time information t7 of the second probe packet, sending time information t7' of the second probe packet, sending time information t8 of the second downlink packet, and receiving time information t8' of the second downlink packet. The UPF determines the downlink delay between the UPF and the UE expressed as T4 + T2 according to the downlink delay T4 between the UPF and the access network element and the downlink delay T2 between the access network element and the UE.

Following technical solutions of the embodiments of the present disclosure are illustrated with specific application examples. It should be noted that the following application examples may be implemented separately or in combination with others.

### Application example 1

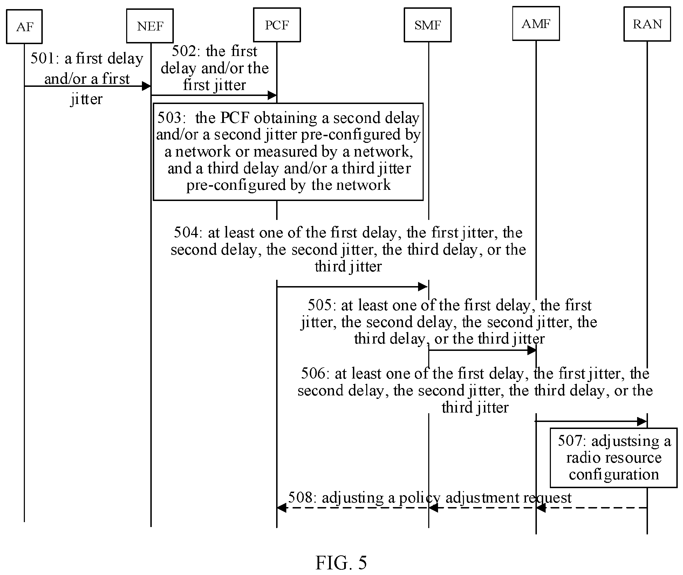

The PCF obtains the first delay and/or the first jitter from the AF, and may obtain the second delay and/or the second jitter pre-configured by a network or measured by the network, and may obtain the third delay and/or the third jitter pre-configured by the network. The PCF sends at least one of the first delay, the first jitter, the second delay, the second jitter, the third delay, or the third jitter to the RAN. The RAN adaptively adjusts the radio resource configuration (such as a frame structure configuration shown in FIG. 2). If the RAN fails to adjust the radio resource configuration, the RAN may feed back at least one of the first delay, the first jitter, the second delay, the second jitter, the third delay, or the third jitter to the core network (such as the SMF or the PCF). The core network may adjust the policy. For the meaning of at least one of the first delay, the first jitter, the second delay, the second jitter, the third delay, or the third jitter, refer to the above solutions. A specific process is shown in FIG. 5, including S501 to S508.

At S501, an AF sends a first delay and/or a first jitter to an NEF.

The AF sends the first delay and/or the first jitter to the NEF via an Nnef_ParameterProvision service.

At S502, the NEF sends the first delay and/or the first jitter to a PCF.

The NEF authorizes a request of the AF, and sends the first delay and/or the first jitter to the PCF via an Npcf_PolicyAuthorization_Create request.

At S503, the PCF obtains a second delay and/or a second jitter by network preconfiguration or a network measurement, and a third delay and/or a third jitter by the network preconfiguration.

At S504, the PCF sends at least one of the first delay, the first jitter, the second delay, the second jitter, the third delay, or the third jitter to an SMF.

The PCF may send at least one of the first delay, the first jitter, the second delay, the second jitter, the third delay, or the third jitter to the SMF based on a Policy and Charging Control (PCC) rule in a Protocol Data Unit (PDU) session establishment or modification process.

At S505 and S506: the SMF sends at least one of the first delay, the first jitter, the second delay, the second jitter, the third delay, or the third jitter to an RAN via an AMF.

The SMF may send at least one of the first delay, the first jitter, the second delay, the second jitter, the third delay, or the third jitter to the AMF via an Namf_Communication_N1N2MessageTransfer message. The AMF may send at least one of the first delay, the first jitter, the second delay, the second jitter, the third delay, or the third jitter to the RAN via an N2 interface.

At S507 and S508, the RAN adjusts a radio resource configuration according to at least one of the first delay, the first jitter, the second delay, the second jitter, the third delay, or the third jitter. Further, if the RAN fails to adjust the radio resource configuration, the RAN may send a policy adjustment request to the SMF and/or the PCF via the AMF. The policy adjustment request carries a current radio resource configuration and at least one of the first delay, the first jitter, the second delay, the second jitter, the third delay, or the third jitter. The SMF and/or the PCF adjusts a policy.

If the RAN fails to adjust the radio resource configuration, the policy adjustment request may be sent to the SMF and/or the PCF via an N2 SM message and an Nsmf_PDUSession_UpdateSMContext service. The policy adjustment request is configured to request to adjust the policy.

In some implementations, the PCF may also feed back at least one of the first delay, the first jitter, the second delay, the second jitter, the third delay, or the third jitter to the AF. The AF may adjust the policy according to at least one of the first delay, the first jitter, the second delay, the second jitter, the third delay, or the third jitter.

### Application example 2

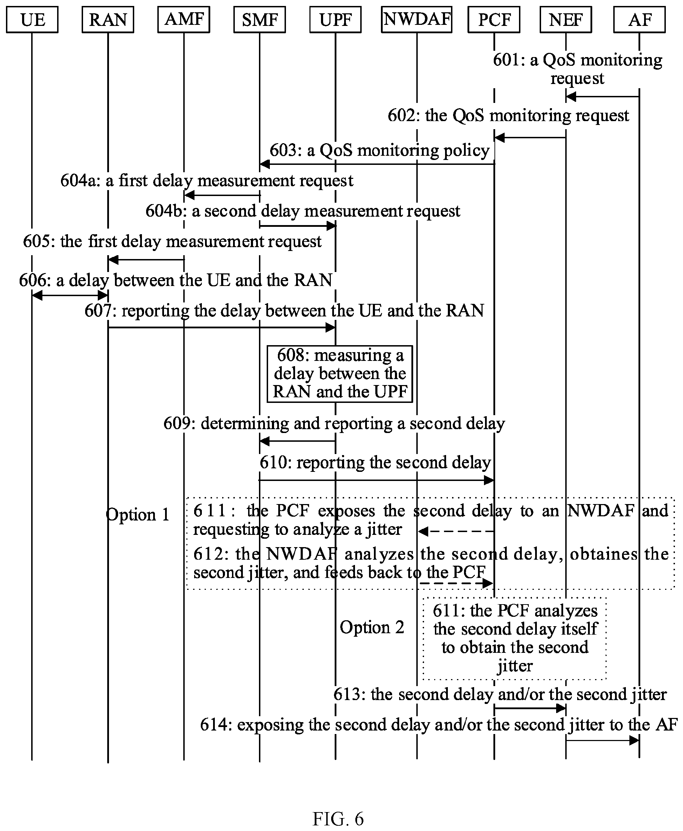

The PCF may obtain the second delay and/or the second jitter by the network preconfiguration or by the network measurement. For the case where the PCF obtains the second delay and/or the second jitter by the network measurement, a process of the network measurement of the second delay and/or the second jitter is shown in FIG. 6, including S601 to S609.

At S601, an AF sends a QoS monitoring request to an NEF.

The AF sends the QoS monitoring request to the NEF via an Nnef_AFsessionWithQoS_Create request message (including a UE address, an AF identifier, a flow description, QoS parameters, and the like). In some implementations, the QoS monitoring request carries at least one of a delay measurement identifier, a delay measurement time period, a delay measurement frequency, first indication information, second indication information, or third indication information. The first indication information indicates to measure an OWD and/or measure an RTT. The second indication information indicates whether the UE is clock synchronized with the access network element. The third indication information indicates whether a UPF is clock synchronized with the access network element. Optionally, the QoS monitoring request also carries PDU set delay information indicating to measure a delay of a PDU set.

At S602, the NEF authorizes the QoS monitoring request of the AF and sends the QoS monitoring request to a PCF.

The NEF authorizes the QoS monitoring request of the AF, and sends at least one of the delay measurement identifier, the delay measurement time period, the delay measurement frequency, the first indication information, the second indication information, or the third indication information and other parameters in the QoS monitoring request to the PCF via an Npcf_PolicyAuthorization_Create request.

At S603, the PCF sends a QoS monitoring policy to an SMF based on the QoS monitoring request of the AF.

If a network is not pre-configured with the second delay and/or the second jitter, the PCF forms an authorized QoS monitoring policy for a service data flow after receiving the QoS monitoring request from the AF. The PCF triggers the SMF to initiate a session modification process via an Npcf_SMPolicyControl_UpdateNotify request. A PCC rule provided by the PCF to the SMF includes the QoS monitoring policy. The QoS monitoring policy includes at least one of the delay measurement identifier, the delay measurement time period, the delay measurement frequency, the first indication information, the second indication information, or the third indication information. The first indication information indicates to measure an OWD and/or measure an RTT. The second indication information indicates whether the UE is clock synchronized with the access network element. The third indication information indicates whether the UPF is clock synchronized with the access network element.

If the first indication information indicates to measure the RTT, the PCF determines which QoS flows need to measure the RTT according to the QoS monitoring request. For a QoS flow that need to measure the RTT, a delay measurement request triggered by the SMF needs to carry the first indication information. The first indication information indicates to measure the RTT.

At S604a, the SMF sends a first delay measurement request to an RAN via an AMF.

The SMF activates end-to-end uplink and downlink data packet delay measurement between the UE and an anchor UPF in the session modification process. After the SMF sends a Namf_Communication_N1N2MessageTransfer message to the AMF, the AMF sends the first delay measurement request to the RAN via an N2 interface. The first delay measurement request carries at least one of a delay measurement time period, a delay measurement frequency, first indication information, or second indication information. The first indication information indicates to measure an OWD and/or measure an RTT. The second indication information indicates whether the UE is clock synchronized with the access network element. The first indication information may be per QoS flow indication, that is, the first indication information is for one or several QoS flows.

At S604b, the SMF sends a second delay measurement request to the UPF.

The SMF activates end-to-end uplink and downlink data packet delay measurement between the UE and the anchor UPF in the session modification process. The SMF sends an N4 Session Modification Request message to a UPF which used as a PDU session anchor via an N4 interface. The message includes the second delay measurement request. The first delay measurement request carries at least one of the delay measurement time period, the delay measurement frequency, the first indication information, or the third indication information. The first indication information indicates to measure the OWD and/or measure the RTT, and the third indication information indicates whether the UPF is clock synchronized with the access network element.

The delay measurement time period instructs the UPF to measure the delay according to a time period. The delay measurement frequency instructs the UPF to measure the delay according to a measurement frequency.

It should be noted that S604a and S604b are steps that need to be performed.

At S605, the AMF forwards the first delay measurement request to the RAN.

The AMF sends a message including the first delay measurement request sent by the SMF to the RAN via an N2 message. The first delay measurement request carries at least one of the delay measurement time period, the delay measurement frequency, the first indication information, or the second indication information. The first indication information indicates to measure an OWD and/or measure an RTT. The second indication information indicates whether the UE is clock synchronized with the access network element.

The delay measurement time period indicates the RAN to measure the delay according to the time period. The delay measurement frequency indicates the RAN to measure the delay according to the measurement frequency.

At S606, the RAN measures a delay between the UE and the RAN.

The RAN performs packet switching with the UE to measure the delay between the UE and the RAN. If the first indication information indicates to measure the OWD, the RAN measures an OWD between the UE and the RAN. If the first indication information indicates to measure the RTT, the RAN measures an RTT between the UE and the RAN. Further, when the RAN measures the RTT between the UE and the RAN, if an uplink delay and a downlink delay are measured separately, the RAN measures an uplink delay and a downlink delay between the UE and the RAN, and determines the RTT between the UE and the RAN based on the uplink delay and the downlink delay; if the uplink delay and the downlink delay are not measured separately, the RAN directly measures the RTT between the UE and the RAN.

At S607, the RAN reports a measured delay between the UE and the RAN to the UPF.

The RAN sends a measured data packet delay of a Uu interface (that is, the delay between the UE and the RAN) to the UPF via an uplink packet. The delay may be the OWD between the UE and RAN (a one-way uplink delay, and/or a one-way downlink delay), or the RTT between the UE and the RAN.

At S608, the UPF measures a delay between the RAN and the UPF.

If the first indication information indicates to measure the OWD, the UPF measures an OWD between the RAN and the UPF. If the first indication information indicates to measure the RTT, the UPF measures an RTT between the RAN and the UPF. Further, when the UPF measures the RTT between the RAN and the UPF, if an uplink delay and a downlink delay are measured separately, the UPF measures an uplink delay and a downlink delay between the RAN and the UPF, and determines the RTT between the RAN and the UPF based on the uplink delay and the downlink delay; if the UPF does not measure the uplink and the downlink delay separately, the UPF directly measures the RTT between the RAN and the UPF.

At S609, the UPF determines a second delay based on the delay between the UE and the RAN and the delay between the RAN and the UPF, and reports the second delay to the SMF.

The delay here may refer to an OWD or an RTT. The UPF reports the second delay determined to the SMF via an N4 Session Modification Response message.

At S610, the SMF reports the second delay to the PCF.

The SMF may report the second delay to the PCF via an Npcf_SMPolicyControl_UpdateNotify response message.

At S611, the PCF exposes the second delay to an NWDAF and requests the NWDAF to analyze a corresponding second jitter. Or, the PCF analyzes the second delay itself to obtain a corresponding second jitter.

After the PCF obtains the second delay, the PCF may adopt following two options.

Option 1: the PCF exposes the second delay to the NWDAF, and sends an Nnwdaf_AnalyticsInfo_Request message to the NWDAF to request the NWDAF to perform delay analysis to obtain the corresponding second jitter.

Option 2: the PCF analyzes the second delay obtained itself, obtains the corresponding second jitter, and jumps directly to S613.

At S612, the NWDAF analyzes the second delay, obtains the corresponding second jitter, and feeds back the second jitter to the PCF.

The NWDAF obtains the second jitter after analyzing and processing the second delay, and sends the second jitter to the PCF via an Nnwdaf_AnalyticsInfo_Request response.

It should be noted that for the second delay, any part of the delay between the UE and the RAN and the delay between the UPF and the RAN may be replaced by a network preconfigured result according to a network decision.

At S613, the PCF sends the second delay and/or the second jitter to the NEF.

The PCF sends the second delay and/or the second jitter and other QoS monitoring data to the NEF via Npcf_Policy Authorization Notify.

At S614, the NEF exposes the second delay and/or the second jitter to the AF.

The NEF sends the second delay and/or the second jitter and the other QoS monitoring data to the AF via Nnef_AFsessionWithQoS_Notify.

In some service scenarios, user experience is affected by the RTT, that is, the RTT from the UE to the RAN and the RTT from the RAN to the UPF need to be paid attention to. Generation of a jitter is related to delays of both uplink and downlink packets. In an ideal case, assuming that a same QoS is used in the uplink and the downlink, an RTT of an uplink packet (denoted as RTT1) and an RTT of a downlink packet (denoted as RTT2) are the same, and the RTT may be measured uniformly. However, for an XR service, QoSs (such as a 5G QoS indicator (5QI) value) used by the uplink and the downlink may be different, which may be regarded as two different QoS flows. In this case, the RTT of the uplink packet (denoted as RTT1) and the RTT of the downlink packet (denoted as RTT2) are different and need to be determined independently. It is necessary to determine the RTT1 of the uplink packet and the RTT2 of the downlink packet separately, so as to obtain RTT = (RTT1 + RTT2) / 2.

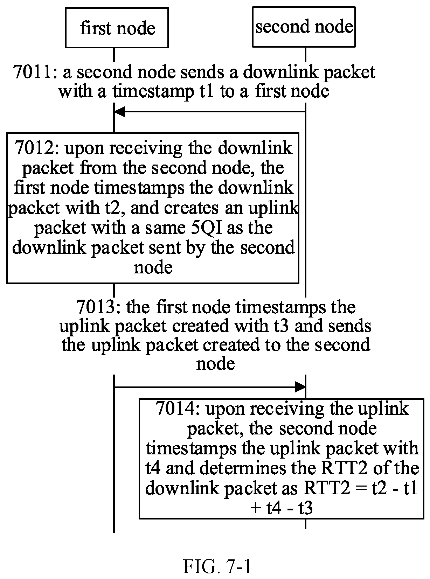

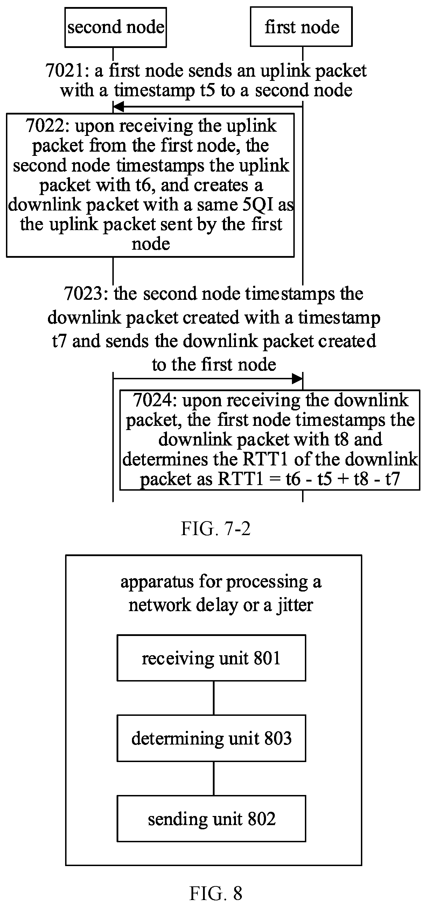

FIG. 7-1 and FIG. 7-2 show a process of measuring the RTT1 of the uplink packet and the RTT2 of the downlink packet separately. If the RTT from the UE to the RAN is measured, a first node is the UE and a second node is the RAN. If the RTT from the RAN to the UPF is measured, the first node is the RAN and the second node is the UPF.

In the case that the first node is clock synchronized with the second node, FIG. 7-1 illustrates a schematic diagram of measuring an RTT2 of a downlink packet, including S7011 to S7014.

At S7011, a second node sends a downlink packet with a timestamp t1 to a first node.

At S7012, upon receiving the downlink packet from the second node, the first node timestamps the downlink packet with t2, and creates an uplink packet with a same 5QI as the downlink packet sent by the second node.

At S7013, the first node timestamps the uplink packet created with t3 and sends the uplink packet created to the second node.

At S7014, upon receiving the uplink packet, the second node timestamps the uplink packet with t4 and determines the RTT2 of the downlink packet as RTT2 = t2 - t1 + t4 - t3.

In the case that the first node is not clock synchronized with the second node, FIG. 7-2 illustrates a schematic diagram of measuring an RTT1 of an uplink packet, including S7021 to S7024.

At S7021, a first node sends an uplink packet with a timestamp t5 to a second node.

At S7022, upon receiving the uplink packet from the first node, the second node timestamps the uplink packet with t6, and creates a downlink packet with a same 5QI as the uplink packet sent by the first node.

At S7023, the second node timestamps the downlink packet created with a timestamp t7 and sends the downlink packet created to the first node.

At S7024, upon receiving the downlink packet, the first node timestamps the downlink packet with t8 and determines the RTT1 of the downlink packet as RTT1 = t6 - t5 + t8 - t7.

The first node sends the RTT1 determined to the second node, and the second node obtains an average RTT = (RTT1 + RTT2) / 2 based on the RTT1 and the RTT2.

On the one hand, the technical solution of the embodiments of the present disclosure takes the delay and/or the jitter of the application into account. On the other hand, the delay and/or the jitter generated in the network transmission process is further taken into account (including the delay and/or the jitter between the UE and the access network element, and the delay and/or the jitter between the access network element and the UPF). On another hand, the delay and/or the jitter between the UPF and the AS is further taken into account. The method to obtain these delays and/or these jitters is specified. By specifying delays and/or jitters corresponding to different phases, a basis for adjusting configuration related to service transmission is provided.

FIG. 8 is a schematic diagram 1 of a structure of an apparatus for processing a network delay or a jitter according to the embodiments of the present disclosure. As shown in FIG. 8, the apparatus includes:
a receiving unit 801, configured to receive a first delay and/or a first jitter sent by an AF, in which the first delay and/or the first jitter is a delay and/or a jitter of an application.

In some implementations, the apparatus further includes:
a sending unit 802, configured to send at least one of a second delay, a second jitter, a third delay, a third jitter, the first delay, or the first jitter to an access network element or to an access network element via a second network function.

In some implementations, the second delay is a delay of a network transmission process.

In some implementations, the second jitter is a jitter of the network transmission process.

In some implementations, the network transmission includes N3 transmission and/or N9 transmission.

In some implementations, the third delay is a delay between an AS and a UPF, and transmission between the AS and the UPF is N6 transmission.

In some implementations, the third jitter is a jitter between the AS and the UPF, and transmission between the AS and the UPF is N6 transmission.

In some implementations, the second delay includes a fourth delay and/or a fifth delay, in which the fourth delay is a transmission delay between a UE and the access network element, and the fifth delay is a transmission delay between the UPF and the access network element.

In some implementations, the second jitter includes a fourth jitter and/or a fifth jitter, in which the fourth jitter is a jitter between a UE and the access network element, and the fifth jitter is a jitter between the UPF and the access network element.

In some implementations, the transmission delay is an OWD and/or an RTT.

In some implementations, the access network element adjusts a radio resource configuration and/or a packet prediction based on at least one of the second delay, the second jitter, the third delay, the third jitter, the first delay, or the first jitter. In response to the access network element failing to adjust the radio resource configuration, the access network element notifies the second network function or the first network function, so that the second network function or the first network function notifies the AF to adjust a policy.

In some implementations, the sending unit 802 is configured to send at least one of the second delay, the second jitter, the third delay, the third jitter, the first delay, or the first jitter to the AF, in which a policy is adjusted by the AF.

In some implementations, the third delay and/or the third jitter is an N6 transmission delay and/or jitter which is pre-configured by a network on a fourth network function or the second network function.

In some implementations, the second delay and/or the second jitter is pre-configured by a network; or, the second delay and/or the second jitter is obtained by a measurement.

In some implementations, the receiving unit 801 is configured to receive the second delay sent by the second network function, in which the second delay is obtained based on a measurement process.

In some implementations, in response to the second delay and/or the second jitter being obtained by the measurement, the sending unit 802 is configured to send the second delay to a third network function, in which the third network function determines the second jitter based on the second delay, and the receiving unit 801 receives the second jitter sent by the third network function.

In some implementations, in response to the second delay and/or the second jitter being obtained by the measurement, the apparatus further includes: a determining unit 803, configured to determine the second jitter based on the second delay.

In some implementations, the sending unit 802 is configured to send the second delay and/or the second jitter to the AF.

In some implementations, the measurement process includes:
the first network function receiving a QoS monitoring request sent by the AF.

In some implementations, the measurement process includes:
the first network function sending a QoS monitoring policy to the second network function according to the QoS monitoring request, and the second network function sending a first delay measurement request to the access network element and a second delay measurement request to the UPF according to the QoS monitoring policy.

In some implementations, the first delay measurement request is configured to request the access network element to measure a transmission delay between the UE and the access network element; and the second delay measurement request is configured to request the UPF to measure a transmission delay between the access network element and the UPF.

In some implementations, the measurement process includes:
the access network element sending a measured transmission delay between the UE and the access network element to the UPF; and
the UPF determining the second delay according to the received transmission delay between the UE and the access network element and a measured transmission delay between the access network element and the UPF, and sending the second delay to the second network function.

In some implementations, the QoS monitoring request carries at least one of a delay measurement identifier, a delay measurement time period, a delay measurement frequency, first indication information, second indication information, or third indication information, in which the first indication information indicates to measure an OWD and/or measure an RTT, the second indication information indicates whether the UE is clock synchronized with the access network element, and the third indication information indicates whether the UPF is clock synchronized with the access network element.

In some implementations, the QoS monitoring policy carries at least one of a delay measurement identifier, a delay measurement time period, a delay measurement frequency, first indication information, second indication information, or third indication information, in which the first indication information indicates to measure an OWD and/or measure an RTT, the second indication information indicates whether the UE is clock synchronized with the access network element, and the third indication information indicates whether the UPF is clock synchronized with the access network element.

In some implementations, the first delay measurement request carries at least one of a delay measurement time period, a delay measurement frequency, first indication information, or second indication information, in which the first indication information indicates to measure an OWD and/or measure an RTT, and the second indication information indicates whether the UE is clock synchronized with the access network element.

In some implementations, in response to the first indication information indicating to measure the OWD, the access network element measures an OWD between the UE and the access network element; and in response to the first indication information indicating to measure the RTT, the access network element measures an RTT between the UE and the access network element.

In some implementations, the second delay measurement request carries at least one of a delay measurement time period, a delay measurement frequency, first indication information, or third indication information. The first indication information indicates to measure an OWD and/or measure a RTT. The third indication information indicates whether the UPF is clock synchronized with the access network element.

In some implementations, in response to the first indication information indicating to measure the OWD, the UPF measures an OWD between UPF and the access network element; and in response to the first indication information indicating to measure the RTT, the UPF measures an RTT between the UPF and the access network element.

It should be understood by those skilled in the art that for implementation functions of each unit of the apparatus for processing a network delay or a jitter shown in FIG. 8, refer to related descriptions of the above methods. The functions of each unit of the apparatus for processing a network delay or a jitter shown in FIG. 8 may be implemented either by a program running on a processor or by a specific logic circuit.

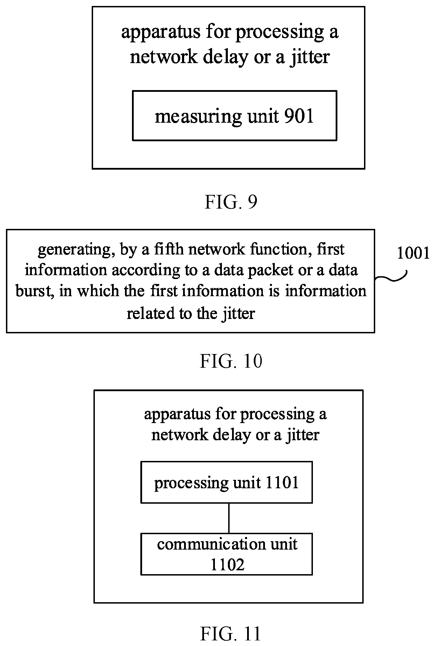

FIG. 9 is a schematic diagram 2 of a structure of an apparatus for processing a network delay or a jitter according to the embodiments of the present disclosure. As shown in FIG. 9, the apparatus includes:
a measuring unit 901, configured to measure an uplink delay between a UE and a UPF; and/or measuring a downlink delay between the UPF and the UE.

In some implementations, the UPF is clock synchronized with an access network element; or, the UPF is not clock synchronized with an access network element.

In some implementations, in the case that the UPF is clock synchronized with the access network element, in response to measuring the uplink delay between the UE and the UPF, the measuring unit 901 is configured to receive a first uplink packet sent by the access network element and an uplink delay between the UE and the access network element measured by the access network element sent along with the first uplink packet; and determine the uplink delay between the UE and the UPF according to a timestamp carried by the first uplink packet and the received uplink delay between the UE and the access network element.

In some implementations, the first uplink packet is an uplink packet sent by the access network element to the UPF.

In some implementations, in the case that the UPF is clock synchronized with the access network element, in response to measuring the downlink delay between the UE and the UPF, the measuring unit 901 is configured to send a first downlink packet to the access network element; receive the second uplink packet sent by the access network element and a downlink delay between the access network element and the UE measured by the access network element sent along with the second uplink packet; and determine the downlink delay between the UPF and the UE according to the time information of the first downlink packet carried by the second uplink packet and the received downlink delay between the access network element and the UE.

In some implementations, in the case that the UPF is not clock synchronized with the access network element, the measuring unit 901 is configured to receive a third uplink packet sent by the access network element and send a first probe packet to the access network element; receive a fourth uplink packet sent by the access network element, an uplink delay between the access network element and the UPF determined by the access network element sent along with the fourth uplink packet, and a measured uplink delay between the UE and the access network element; and determine the uplink delay between the UE and the UPF according to a received uplink delay between the access network element and the UPF and the uplink delay between the UE and the access network element.

In some implementations, the access network element determines an uplink delay between the access network element and the UPF according to receiving time information of the first probe packet, and/or sending time information of the first probe packet, and/or sending time information of the third uplink packet, and/or receiving time information of the third uplink packet.

In some implementations, the access network element sends a determined uplink delay between the access network element and the UPF and a measured uplink delay between the UE and the access network element along with the fourth uplink packet to the UPF.

In some implementations, in the case that the UPF is not clock synchronized with the access network element, in response to measuring the downlink delay between the UE and the UPF, the measuring unit 901 is configured to send a second downlink packet to the access network element and receive a second probe packet sent by the access network element, in which the second probe packet carries a downlink delay between the access network element and the UE; determine a downlink delay between the UPF and the access network element according to receiving time information of the second probe packet, and/or sending time information of the second probe packet, and/or sending time information of the second downlink packet, and/or receiving time information of the second downlink packet; and determine the downlink delay between the UPF and UE according to the downlink delay between the UPF and the access network element and the downlink delay between the access network element and the UE.

It should be understood by those skilled in the art that for implementation functions of each unit of the apparatus for processing a network delay or a jitter shown in FIG. 9, refer to related descriptions of the above methods. The functions of each unit of the apparatus for processing a network delay or a jitter shown in FIG. 9 may be implemented either by a program running on a processor or by a specific logic circuit.

FIG. 10 is a flowchart of a method for processing a jitter according to the embodiments of the present disclosure. As shown in FIG. 10, the method includes S1001.

At S1001, a fifth network function generates first information according to a data packet or a data burst, in which the first information is information related to the jitter.

In a downlink scenario, the fifth network function generates the first information according to the data packet or the data burst, in which the first information is the information related to the jitter.

In some implementations, the fifth network function is a UPF.

In some implementations, the first information includes a jitter in a transmission process between an AS and the UPF, that is, an N6 jitter or an N6 transmission jitter.

In some implementations, the first information includes at least one of: jitter information; data jitter information related to a period; or information of a jitter or a jitter range of a service flow.

In some implementations, the fifth network function generates the first information according to the data packet or the data burst, or generates the first information according to other information, for example, based on second information sent by a sixth network function, or based on third information sent by an AF to a 5G core network function, which are explained below.

In some implementations, the fifth network function generates the first information based on received second information sent by a sixth network function.

In some implementations, the sixth network function is an SMF.

In some implementations, the second information is policy information of a core network.

In some implementations, the second information includes at least one of: a jitter calculation policy, a jitter monitoring policy, a jitter statistical policy, or a jitter policy.

In some implementations, the fifth network function generates the first information based on the third information sent by the AF to the 5G core network function.

In some implementations, the third information includes at least one of: indication information indicating a 5G network to perform jitter statistics and/or a jitter measurement; or service information, including at least one of: an Internet Protocol (IP) 5-tuple, an application identity (ID), and an application identifier.

In some implementations, the fifth network function generating the first information according to the data packet or the data burst refers to: the fifth network function generating the first information according to at least one of an arrival time of the data packet, an arrival time of the data burst, and a timestamp carried by the data packet.

In some implementations, the fifth network function generating the first information according to at least one of the arrival time of the data packet, the arrival time of the data burst, and the timestamp carried by the data packet refers to: the fifth network function recognizing that the data packet belongs to a first data burst according to the timestamp carried by the data packet; and the fifth network function generating the first information according to an arrival time of the first data burst.

In some implementations, the method further includes: the fifth network function sending the first information to a base station or a seventh network function.

In some implementations, the seventh network function is a control plane function of a 5G core network, which may be an SMF.

In some implementations, the method further includes: the fifth network function or the control plane function of the 5G core network sending fourth information to the base station.

In some implementations, the control plane function of the 5G core network is the SMF.

In some implementations, the fourth information is a network transmission jitter, measured by the core network or preconfigured by a network, including at least one of: an N3 jitter or an N3 transmission jitter; an N9 jitter or an N9 transmission jitter; and a transmission jitter or a jitter between the base station and a PSA UPF.

Through the above solution, the UPF may obtain the N6 jitter. The above solution may be applied to the solution relevant to FIG. 3.

FIG. 11 is a schematic diagram of a structure of an apparatus for processing a jitter according to the embodiments of the present disclosure. As shown in FIG. 11, the apparatus includes:

a processing unit 1101, configured to generate first information according to a data packet or a data burst, in which the first information is information related to the jitter.

In some implementations, the fifth network function is a UPF.

In some implementations, the first information is a jitter in a transmission process between an AS and the UPF, that is, an N6 jitter or an N6 transmission jitter.

In some implementations, the first information includes at least one of: jitter information; data jitter information related to a period; or information of a jitter or a jitter range of a service flow.

In some implementations, the processing unit 1101 is configured to generate the first information based on received second information sent by a sixth network function.

In some implementations, the sixth network function is an SMF.

In some implementations, the second information is policy information of a core network.

In some implementations, the second information includes at least one of: a jitter calculation policy, a jitter monitoring policy, a jitter statistical policy, or a jitter policy.

In some implementations, the processing unit 1101 is configured to generate the first information based on third information sent by an AF to a 5G core network function.

In some implementations, the third information includes at least one of: indication information indicating a 5G network to perform jitter statistics and/or a jitter measurement; or service information, including at least one of: an IP 5-tuple, an application identity (ID), and an application identifier.

In some implementations, the processing unit 1101 is configured to generate the first information according to at least one of an arrival time of the data packet, an arrival time of the data burst, and a timestamp carried by a data packet.

In some implementations, the processing unit 1101 is configured to recognize that the data packet belongs to a first data burst according to the timestamp carried by the data packet; and generate the first information according to an arrival time of the first data burst.

In some implementations, the apparatus further includes: a communication unit 1102, configured to send the first information to a base station or a seventh network function.

In some implementations, the seventh network function is a control plane function of a 5G core network, which may be an SMF.

In some implementations, the communication unit 1102 is configured to send fourth information to the base station.

In some implementations, the control plane function of the 5G core network is the SMF.

In some implementations, the fourth information is a network transmission jitter, measured by the core network or preconfigured by a network, including at least one of: an N3 jitter or an N3 transmission jitter; an N9 jitter or a N9 transmission jitter; and a transmission jitter or a jitter between the base station and a PSA UPF.

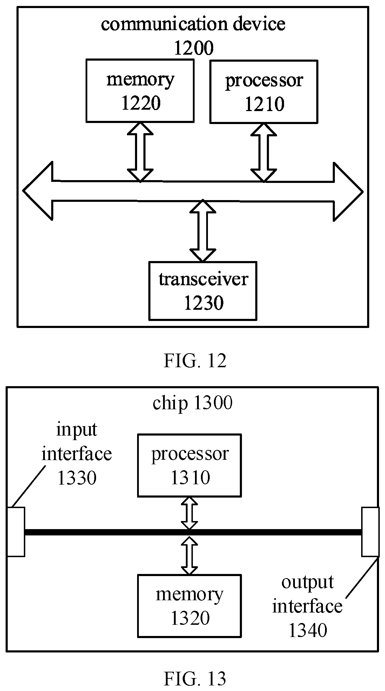

FIG. 12 is a block diagram of a communication device 1200 according to the embodiments of the present disclosure. The communication device 1200 shown in FIG. 12 includes a processor 1210, in which the processor 1210 may call and run the computer program stored in the memory to implement the method in the embodiments of the present disclosure.

Optionally, as shown in FIG. 12, the communication device 1200 may also include a memory 1220, in which the processor 1210 may call and run the computer program stored in the memory to implement the method in the embodiments of the present disclosure.

The memory 1220 may be a separate device independent of the processor 1210, or may also be integrated in the processor 1210.

Optionally, as shown in FIG. 12, the communication device 1200 may also include a transceiver 1230. The processor 1210 may control the transceiver 1230 to communicate with other devices, specifically, send information or data to other devices, or receive information or data sent by other devices.

The transceiver 1230 may include a transmitter and a receiver. The transceiver 1230 may further include an antenna. There may be one or more antennas.

The communication device 1200 may implement corresponding processes of each method of the embodiments of the present disclosure, which is not repeated here for the sake of brevity.

FIG. 13 is a block diagram of a chip according to the embodiments of the present disclosure. The chip 1300 shown in FIG. 13 includes a processor 1310, in which the processor 1310 may call and run a computer program stored in a memory to implement the method in the embodiments of the present disclosure.

Optionally, as shown in FIG. 13, the chip 1300 may also include a memory 1320. The processor 1310 may call and run a computer program from the memory 1320 to implement the method in the embodiments of the present disclosure.

The memory 1320 may be a separate device independent of the processor 1310, or may also be integrated in the processor 1310.

Optionally, the chip 1300 may also include an input interface 1330. The processor 1310 may control the input interface 1330 to communicate with other devices or chips, specifically, obtain information or data sent by other devices or chips.

Optionally, the chip 1300 may also include an output interface 1340. The processor 1310 may control the output interface 1340 to communicate with other devices or chips, specifically, output information or data to other devices or chips.

The chip may implement corresponding processes of each method of the embodiments of the present disclosure, which is not repeated here for the sake of brevity.

It may be understood that the chip in the embodiments of the present disclosure may also be referred to as a system-on-chip, a system chip, a chip system, or the like.

It should be understood that the processor in the embodiments of the present disclosure may be an integrated circuit chip with a signal processing capability. In an implementation process, each step of the above method embodiments may be completed by an integrated logic circuit of a hardware in the processor or an instruction in the form of software. The above processor may be a general-purpose processor, a Digital Signal Processor (DSP), an Application Specific Integrated Circuit (ASIC), a Field Programmable Gate Arrays (FPGA), or other programmable logic device, a discrete gate or transistor logic device, a discrete hardware component, etc. The processor may realize or execute methods, steps and logic block diagrams in the embodiments of the present disclosure. The general-purpose processor may be a microprocessor or any regular processor. The steps in combination with the method in the embodiments of the present disclosure may be directly executed by a hardware decoding processor, or by a combination of hardware and software modules in the decoding processor. The software module may be located in a random memory, a flash memory, a Read-Only Memory (ROM), a Programmable Read-Only Memory (PROM), an Electrically Erasable Programmable Read-Only Memory (EEPROM), a register, or other mature storage medium in the art. The storage medium is located in the memory, and the processor reads the information in the memory to complete steps of the above method with its hardware.

It should be understood that the memory in the embodiments of the present disclosure may be a volatile memory or a non-volatile memory, and may include both volatile memory and non-volatile memory. The non-volatile memory may be a Read-Only Memory (ROM), a Programmable Read-Only Memory (PROM), an Erasable Programmable Read-Only Memory (EPROM), an Electrically Erasable Programmable Read-Only Memory (EEPROM), or a flash memory. The volatile memory may be a Random Access Memory (RAM), which is used as an external cache. By illustrative but not restrictive description, many forms of RAM are available, such as a Static Random Access Memory (SRAM), a Dynamic Random Access Memory (DRAM), a Synchronous Dynamic Random Access Memory (SDRAM), a Double Data Rate Synchronous Dynamic Random Access Memory (DDR SDRAM), an Enhanced Synchronous Dynamic Random Access Memory (ESDRAM), a SyncLink Dynamic Random Access Memory (SLDRAM), and a Direct Rambus Random Access Memory (DRRAM). The memory in the embodiments of the present disclosure is intended to include, but is not limited to, these and any other suitable type of memories.

It should be understood that above memories are illustrative but not restrictive. For example, the memory in the embodiments of the present disclosure may also be an SRAM, a DRAM, an SDRAM, a DDRSDRAM, an ESDRAM, an SLDRAM, a DRRAM and so on. That is, memory in the embodiments of the present disclosure is intended to include, but are not limited to, these and any other suitable types of memories.

The embodiments of the present disclosure also provides a computer readable storage medium for storing a computer program. The computer program causes a computer to implement corresponding processes of each method of the embodiments of the present disclosure, which is not repeated here for the sake of brevity.

The embodiments of the present disclosure also provides a computer program product including computer program instructions. The computer program instructions cause a computer to implement corresponding processes of each method of the embodiments of the present disclosure, which is not repeated here for the sake of brevity.

The embodiments of the present disclosure also provides a computer program. When the computer program is run on a computer, the computer is caused to implement corresponding processes of each method of the embodiments of the present disclosure, which is not repeated here for the sake of brevity.

Those skilled in the related art may realize that, units and steps of examples in embodiments of the present disclosure may be implemented by an electronic hardware or a combination of an electronic hardware and a computer software. Whether the functions are executed by hardware or software depends on a specific application and a design constraint of the technical solutions. Those skilled in the art may adopt different methods for each specific application to implement described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

In several embodiments of the present disclosure, it may be understood that disclosed systems, devices and methods may be achieved by other methods. For example, the device embodiments described above is only illustrative, for example, a division of units is only a logical function division. There may be other division methods when it is actually implemented, for example, a plurality of units or components may be combined or integrated into another system, or some features may be ignored or not executed. On the other hand, coupling or direct coupling or a communication connection between two units shown or discussed may be indirect coupling or a communication connection via some interfaces, devices or units, which may be in an electrical form, a mechanical form, or other forms.

The units described as separate parts may or may not be physically separated, and the parts shown as units may or may not be physical units, i.e., they may be located in one place, or be distributed on a plurality of network units. Some or all of these units may be selected according to actual needs to realize a purpose of the embodiments.

In addition, each functional unit in each embodiment of the present disclosure may be integrated in a processing unit, or each unit may exist separately physically, or two or more units may be integrated in one unit.

If the functions are realized in form of functional software units and are sold or used as separate products, they may be stored in a computer readable storage medium. Based on this understanding, a part of the technical solutions, an essential part of the technical solutions, or a part making a contribution to the related art may be embodied in form of software product, which is stored in a storage medium, and includes several instructions used for causing a computer device (for example, a personal computer, a server or a network device) to execute all or part of steps in the methods described in respective embodiments of the present disclosure. The above storage medium may be any medium capable of storing program codes, including a Universal Serial Bus (USB) flash disk, a mobile hard disk, an ROM, an RAM, a disc, a light disk, and the like.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A method for processing a network delay or a jitter, comprising:
receiving, by a first network function, a first delay and/or a first jitter sent by an application function (AF), wherein the first delay and/or the first jitter is a delay and/or a jitter of an application.

2. The method of claim 1, further comprising:
sending, by the first network function, at least one of a second delay, a second jitter, a third delay, a third jitter, the first delay, or the first jitter to an access network element or to an access network element via a second network function.

3. The method of claim 2, wherein the second delay is a delay of a network transmission process.

4. The method of claim 2, wherein the second jitter is a jitter of a network transmission process.

5. The method of claim 3 or 4, wherein the network transmission comprises N3 transmission and/or N9 transmission.

6. The method of claim 2, wherein the third delay is a delay between an application server (AS) and a user plane function (UPF), and transmission between the AS and the UPF is N6 transmission.

7. The method of claim 2, wherein the third jitter is a jitter between an application server (AS) and a user plane function (UPF), and transmission between the AS and the UPF is N6 transmission.

8. The method of claim 2, wherein,
the second delay comprises a fourth delay and/or a fifth delay, wherein the fourth delay is a transmission delay between a user equipment (UE) and the access network element, and the fifth delay is a transmission delay between a user plane function (UPF) and the access network element.

9. The method of claim 2, wherein,
the second jitter comprises a fourth jitter and/or a fifth jitter, wherein the fourth jitter is a jitter between a user equipment (UE) and the access network element, and the fifth jitter is a jitter between a user plane function (UPF) and the access network element.

10. The method of claim 8, wherein the transmission delay is a one-way delay (OWD) and/or a round-trip time (RTT).

11. The method of any one of claims 2 to 10, further comprising:
adjusting, by the access network element, a radio resource configuration and/or a packet prediction based on at least one of the second delay, the second jitter, the third delay, the third jitter, the first delay, or the first jitter.

12. The method of claim 11, further comprising:
notifying, by the access network element, the second network function or the first network function, so that the second network function or the first network function notifies the AF to adjust a policy.

13. The method of any one of claims 2 to 10, further comprising:
sending, by the first network function, at least one of the second delay, the second jitter, the third delay, the third jitter, the first delay, or the first jitter to the AF, so that the AF adjusts a policy.

14. The method of any one of claims 2 to 10, wherein the third delay and/or the third jitter is an N6 transmission delay and/or an N6 transmission jitter which is pre-configured by a network on a fourth network function or the second network function.

15. The method of any one of claims 2 to 10, wherein,
the second delay and/or the second jitter is pre-configured by a network; or,
at least one of the second delay and/or the second jitter is obtained by a measurement.

16. The method of claim 15, further comprising:
receiving, by the first network function, the second delay sent by the second network function, wherein the second delay is obtained based on a measurement process.

17. The method of claim 15, further comprising:
sending, by the first network function, the second delay to a third network function, wherein the third network function determines the second jitter based on the second delay, and the first network function receives the second jitter sent by the third network function.

18. The method of claim 15, further comprising:
determining, by the first network function, the second jitter based on the second delay.

19. The method of any one of claims 16 to 18, further comprising:
sending, by the first network function, the second delay and/or the second jitter to the AF.

20. The method of any one of claims 16 to 18, wherein the measurement process comprises:
receiving, by the first network function, a quality of service (QoS) monitoring request sent by the AF.

21. The method of any one of claims 16 to 18, wherein the measurement process comprises:
sending, by the first network function, a QoS monitoring policy to the second network function according to a QoS monitoring request, and sending, by the second network function, a first delay measurement request to the access network element and a second delay measurement request to the UPF according to the QoS monitoring policy.

22. The method of claim 21, wherein,
the first delay measurement request is configured to request the access network element to measure a transmission delay between the UE and the access network element; and the second delay measurement request is configured to request the UPF to measure a transmission delay between the access network element and the UPF.

23. The method of any one of claims 16 to 18, wherein the measurement process comprises:
sending, by the access network element, a measured transmission delay between the UE and the access network element to the UPF; and
determining, by the UPF, the second delay according to a received transmission delay between the UE and the access network element and a measured transmission delay between the access network element and the UPF, and sending the second delay to the second network function.

24. The method of claim 21, wherein the QoS monitoring request carries at least one of a delay measurement identifier, a delay measurement time period, a delay measurement frequency, first indication information, second indication information, or third indication information, wherein the first indication information indicates to measure a one-way delay (OWD) and/or measure a round-trip time (RTT), the second indication information indicates that the UE is clock synchronized with the access network element or the UE is not clock synchronized with the access network element, and the third indication information indicates that the UPF is clock synchronized with the access network element and/or the UPF is not clock synchronized with the access network element.

25. The method of claim 21, wherein the QoS monitoring policy carries at least one of a delay measurement identifier, a delay measurement time period, a delay measurement frequency, first indication information, second indication information, or third indication information, wherein the first indication information indicates to measure a one-way delay (OWD) and/or measure a round-trip time (RTT), the second indication information indicates that the UE is clock synchronized with the access network element or the UE is not clock synchronized with the access network element, and the third indication information indicates that the UPF is clock synchronized with the access network element and/or the UPF is not clock synchronized with the access network element.

26. The method of claim 21, wherein,
the first delay measurement request carries at least one of a delay measurement time period, a delay measurement frequency, first indication information, or second indication information, wherein the first indication information indicates to measure a one-way delay (OWD) and/or measure a round-trip time (RTT), and the second indication information indicates that the UE is clock synchronized with the access network element or the UE is not clock synchronized with the access network element.

27. The method of claim 26, wherein
in response to the first indication information indicating to measure the OWD, the access network element measures an OWD between the UE and the access network element; and
in response to the first indication information indicating to measure the RTT, the access network element measures an RTT between the UE and the access network element.

28. The method of claim 21, wherein the second delay measurement request carries at least one of a delay measurement time period, a delay measurement frequency, first indication information, or third indication information, wherein the first indication information indicates to measure a one-way delay (OWD) and/or measure a round-trip delay (RTT), and the third indication information indicates whether the UPF is clock synchronized with the access network element.

29. The method of claim 28, wherein
in response to the first indication information indicating to measure the OWD, the UPF measures an OWD between UPF and the access network element; and
in response to the first indication information indicating to measure the RTT, the UPF measures an RTT between the UPF and the access network element.

30. A method for processing a network delay or a jitter, comprising:
measuring an uplink delay between a user equipment (UE) and a user plane function (UPF); and/or measuring a downlink delay between the UPF and the UE.

31. The method of claim 30, wherein
the UPF is clock synchronized with an access network element; or,
the UPF is not clock synchronized with an access network element.

32. The method of claim 31, wherein in the case that the UPF is clock synchronized with the access network element, the method further comprises: in response to measuring the uplink delay between the UE and the UPF,
receiving, by the UPF, a first uplink packet sent by the access network element and an uplink delay between the UE and the access network element measured by the access network element sent along with the first uplink packet; and
determining, by the UPF, the uplink delay between the UE and the UPF according to a timestamp carried by the first uplink packet and a received uplink delay between the UE and the access network element.

33. The method of claim 32, wherein the first uplink packet is an uplink packet sent by the access network element to the UPF.

34. The method of claim 31, wherein in the case that the UPF is clock synchronized with the access network element, the method further comprises:
sending, by the UPF, a first downlink packet to the access network element; the access network element creating a second uplink packet after receiving the first downlink packet sent by the UPF; wherein the second uplink packet carries time information of the first downlink packet.

35. The method of claim 34, further comprising:
receiving, by the UPF, the second uplink packet sent by the access network element and a downlink delay between the access network element and the UE measured by the access network element sent along with the second uplink packet; and
determining, by the UPF, the downlink delay between the UPF and the UE according to the time information of the first downlink packet carried by the second uplink packet and a received downlink delay between the access network element and the UE.

36. The method of claim 31, wherein in the case that the UPF is not clock synchronized with the access network element, the method further comprises:
receiving, by the UPF, a third uplink packet sent by the access network element and sending a first probe packet to the access network element.

37. The method of claim 36, further comprising:
determining, by the access network element, an uplink delay between the access network element and the UPF according to receiving time information of the first probe packet, and/or sending time information of the first probe packet, and/or sending time information of the third uplink packet, and/or receiving time information of the third uplink packet.

38. The method of claim 37, further comprising:
sending, by the access network element, a determined uplink delay between the access network element and the UPF and a measured uplink delay between the UE and the access network element along with a fourth uplink packet to the UPF.

39. The method of claim 37, further comprising:
determining, by the UPF, the uplink delay between the UE and the UPF according to a received uplink delay between the access network element and the UPF and an uplink delay between the UE and the access network element.

40. The method of claim 31, wherein in the case that the UPF is not clock synchronized with the access network element, the method further comprises:
sending, by the access network element, a second probe packet to the UPF after receiving a second downlink packet sent by the UPF; and the second probe packet carrying a downlink delay between the access network element and the UE.

41. The method of claim 40, further comprising:
determining, by the UPF, a downlink delay between the UPF and the access network element according to receiving time information of the second probe packet, and/or sending time information of the second probe packet, and/or sending time information of the second downlink packet, and/or receiving time information of the second downlink packet.

42. The method of claim 41, further comprising:
determining, by the UPF, the downlink delay between the UPF and UE according to the downlink delay between the UPF and the access network element and the downlink delay between the access network element and the UE.

43. A method for processing a jitter, comprising:
generating, by a fifth network function, first information according to a data packet or a data burst, wherein the first information is information related to the jitter.

44. The method of claim 43, wherein the first information comprises at least one of:
jitter information,
data jitter information related to a period, or
information of a jitter or a jitter range of a service flow.

45. The method of claim 43, wherein generating the first information comprises:
generating, by the fifth network function, the first information based on received second information sent by a sixth network function, wherein the second information comprises at least one of:
a jitter calculation policy,
a jitter monitoring policy,
a jitter statistical policy, or
a jitter policy.

46. The method of claim 43, wherein generating the first information comprises:
generating, by the fifth network function, the first information based on third information sent by an application function (AF) to a 5^{th} Generation (5G) core network function, wherein the third information comprises at least one of:
indication information indicating a 5G network to perform jitter statistics and/or a jitter measurement; or
service information, comprising at least one of: an Internet Protocol (IP) 5-tuple, an application identity (ID), and an application identifier.

47. The method of claim 43, wherein generating, by the fifth network function, the first information according to the data packet or the data burst comprises:
generating, by the fifth network function, the first information according to at least one of an arrival time of the data packet, an arrival time of the data burst, and a timestamp carried by a data packet.

48. The method of claim 47, wherein generating, by the fifth network function, the first information according to at least one of the arrival time of the data packet, the arrival time of the data burst, and the timestamp carried by the data packet comprises:
recognizing, by the fifth network function, that the data packet belongs to a first data burst according to the timestamp carried by the data packet; and
generating, by the fifth network function, the first information according to an arrival time of the first data burst.

49. The method of any one of claims 43 to 48, further comprising:
sending, by the fifth network function, the first information to a base station or a seventh network function, wherein the seventh network function is a control plane function of a 5G core network.

50. The method of claim 49, further comprising:
sending, by the fifth network function or the control plane function of the 5G core network, fourth information to the base station, wherein the fourth information comprises at least one of:
an N3 jitter or an N3 transmission jitter;
an N9 jitter or an N9 transmission jitter; and
a transmission jitter or a jitter between the base station and a protocol data unit (PDU) session anchor (PSA) user plane function (UPF).

51. An apparatus for processing a network delay or a jitter, comprising:
a receiving unit, configured to receive a first delay and/or a first jitter sent by an application function (AF), wherein the first delay and/or the first jitter is a delay and/or a jitter of an application.

52. An apparatus for processing a network delay or a jitter, comprising:
a measuring unit, configured to measure an uplink delay between a user equipment (UE) and a user plane function (UPF); and/or measure a downlink delay between the UPF and the UE.

53. An apparatus for processing a jitter, comprising:
a processing unit, configured to generate first information according to a data packet or a data burst, wherein the first information is information related to the jitter.

54. A communication device, comprising a processor and a memory for storing a computer program, wherein when the computer program stored in the memory is called and run by the processor, the method of any one of claims 1 to 29 is implemented, or the method of any one of claims 30 to 42 is implemented, or the method of any one of claims 43 to 50 is implemented.

55. A chip, comprising a processor for calling and running a computer program from a memory, wherein a device installed with the chip is caused to implement the method of any one of claims 1 to 29, or implement the method of any one of claims 30 to 42, or implement the method of any one of claims 43 to 50.

56. A computer readable storage medium for storing a computer program, wherein the computer program causes a computer to implement the method of any one of claims 1 to 29, or the method of any one of claims 30 to 42, or the method of any one of claims 43 to 50.
